## Europäisches Patentamt

## European Patent Office

## Office européen des brevets

(19)

(11) Publication number: **0 205 989**
**B1**

(12)

# EUROPEAN PATENT SPECIFICATION

(45) Date of publication of the patent specification:
**07.03.90**

(51) Int. Cl.⁴: **F16H 49/00**

(21) Application number: **86107372.4**

(22) Date of filing: **28.09.83**

(60) Publication number of the earlier application in accordance
with Art. 76 EPC: **0106595**

(54) **Power transmission and braking system.**

(30) Priority: **28.09.82 US 426188**

(43) Date of publication of application:
**30.12.86 Bulletin 86/52**

(45) Publication of the grant of the patent:
**07.03.90 Bulletin 90/10**

(84) Designated Contracting States:
**AT BE CH DE FR GB IT LI LU NL SE**

(56) References cited:
**DE-A- 2 542 253**
**FR-A- 426 467**
**US-A- 1 613 991**
**US-A- 1 865 129**
**US-A- 4 041 801**

(73) Proprietor: **Yang, Tai-Her, 5-1 Tay Pyng St., Shi Hwu Jenn Jang Huah Shiann(TW)**

(72) Inventor: **Yang, Tai-Her, 5-1 Tay Pyng St., Shi Hwu Jenn Jang Huah Shiann(TW)**

(74) Representative: **Arthur, Bryan Edward et al, Withers & Rogers 4 Dyer's Buildings Holborn, London EC1N 2JT(GB)**

ACTORUM AG

## Description

The present invention relates to a power transmission and braking system. This application is divided out of European Patent Application No. 83 305 856.3, publication number 0 106 595.

In certain applications a driven object, for example the work-table of a machine tool, needs to be brought to rest quickly. The invention, which is defined in the claims appended hereto, provides a transmission and braking system of improved performance in this respect.

Patent FR 426 467 discloses the features of the precharacterising part of claim 1 and describes a system comprising an electric motor, an electromagnetic clutch, a load and an electromagnetic brake. To arrest the load the clutch is disengaged and power to the motor is cut off, causing the brake to be applied.

Patent US 1 613 991 discloses a mechanism including flexible transmission means.

The invention will be described with reference to the accompanying drawings, in which:

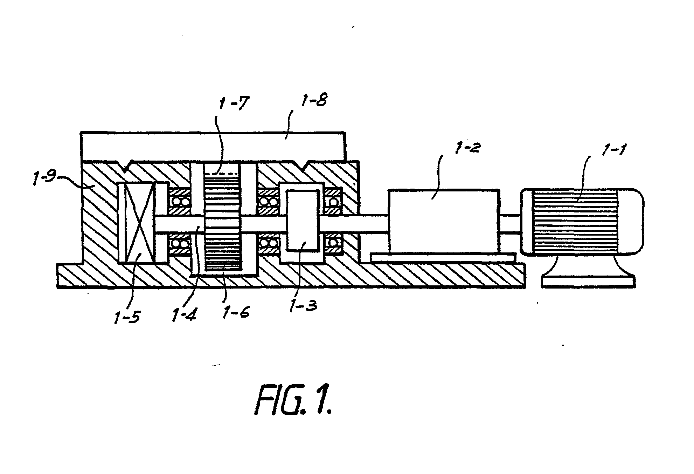

Figure 1 shows a high frequency response brake means having flexible transmission means.
1–1 Driving motor.
1–2 Transmission system.
1–3 Flexible transmission means.
1–4 The output axle of the flexible transmission means.
1–5 Brake means.
1–6 Driving gear.
1–7 Gear rack.
1–8 Work table.
1–9 Lathe bed.
Figure 2 shows the operation characteristics of a high frequency response brake means having flexible transmission means.

The system comprises a drive motor (1-1) driving, through a transmission system (1-2) a flexible transmission means (1-3), which may be a well-known flexible transmission structure, such as mechanical flexibility, or fluid compression flexibility, etc.

The output shaft of the flexible transmission means (1-4) carries a brake (1-5), which may be a hydraulic, pneumatic, or an electro-magnetic driven brake.

The output shaft (1-4) carries a gear (1-6) engaging a rack (1-7) on the underside of the work table (1-8).

On starting, the drive motor (1-1), through transmission means (1-2) and the flexible transmission means (1-3), applies a gradual accelerative torque to its load.

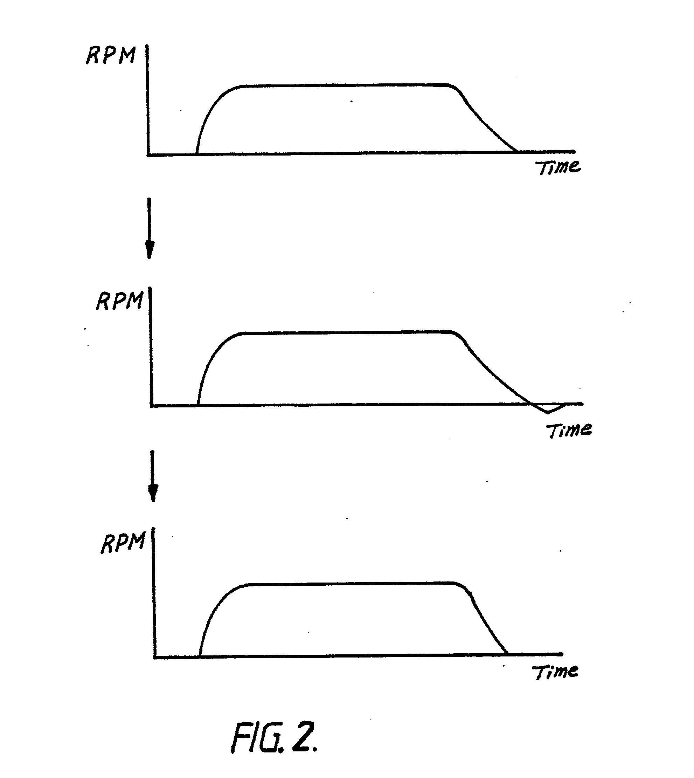

To stop the system the power supply of motor (1-1) is cut off, and simultaneously the brake (1-5) is applied; now, in the total inertia force received by the brake means (1-5) at that instant, the portion received by the rotor of the motor and the transmission means will have a little delay because of the flexible effect; thus, the peak inertia force of the system received by the brake means at that instant will be reduced and the brake will slip so as to have a shorter braking time as shown in Fig. 2.

## Claims

1. A power transmission and braking system comprising a drive motor (1–1), a transmission means (1–3) connecting the drive motor and the load (1–6), the output shaft (1–4) of the transmission means extending beyond the load and carrying a brake (1–5), characterising in that the transmission means (1–3) is a flexible transmission means such that on applying the brake part of the inertial energy of the drive motor (1–1) and an additional transmission system (1–2) provided between the drive motor and the transmission means is absorbed in the flexible transmission means.

2. A system according to claim 1, in which the load comprises the work-table (1–8) of a machine tool.

3. A system according to claim 2, in which the underneath of the work-table carries a rack (1–7) engaged by a gear (1–6) on the output shaft (1–4) of the flexible transmission means.

## Patentansprüche

1. Kraftübertragungs- und Brennsystem mit einem Antriebsmotor (1–1) und einem Übertragungsmittel (1–3), das den Antriebsmotor mit der Last (1–6) verbindet, wobei die Antriebswelle (1–4) des Übertragungsmittels über die Last hinausgeführt ist und an diesem Ende die Bremse (1–5) trägt, dadurch gekennzeichnet, daß das Übertragungsmittel (1–3) ein flexibles Übertragungsmittel ist und beim Bremsen ein Teil der Trägheitsenergie des Antriebsmotors (1–1) und eines zusätzlichen Übertragungssystems (1–2) zwischen dem Antriebsmotor und dem Übertragungsmittel vom flexiblen Übertragungsmittel aufgenommen wird.

2. System nach Anspruch 1, bei dem die Last einen Arbeitstisch (1–6) einer Werkzeugmaschine einschließt.

3. System nach Anspruch 2, bei dem die Unterseite des Arbeitstisches eine Zahnstange (1–7) trägt, mit der ein Zahnrad (1–6) zusammenwirkt, das der Abtriebswelle (1–4) des flexiblen Übertragungsmittels zugeordnet ist.

## Revendications

1. Système de transmission de force motrice et de freinage comprenant un moteur d'entraînement (1–1), des moyens de transmission (1–3) reliant le moteur d'entraînement et la charge (1–6), l'arbre de sortie (1–4) des moyens de transmission s'étendant au-delà de la charge et portant un frein (1–5), caractérisé en ce que les moyens de transmission (1–3) sont des moyens de transmission flexibles tels que, en enclenchant le frein, une part de l'énergie inertielle du moteur d'entraînement (1–1) et d'un système de transmission complémentaire (1–2) placé entre le moteur d'entraînement et les moyens de transmission, soit absorbée dans les moyens de transmission flexibles.

2. Système selon la revendication 1, dans lequel la charge comprend la table de fixation (1–8) de la machine-outil.

3. Système selon la revendication 2, dans lequel le dessous de la table de fixation porte une crémaillère (1–7) enclenchée par un engrenage (1–6) sur l'arbre de sortie (1–4) des moyens de transmission flexibles.

*FIG. 1.*

FIG. 2.